# EUROPÄISCHE PATENTANMELDUNG

(11) **EP 4 608 052 A1**
(43) Veröffentlichungstag der Anmeldung: **27.08.2025**
(21) Anmeldenummer: 24158622.1
(22) Anmeldetag: 20.02.2024
(51) Int. Cl.: H04W 76/12, H04W 92/02

(54) **VERFAHREN ZUM BETREIBEN EINES DETERMINISTISCHEN NETZWERKS MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Walewski, Joachim, 82008 Unterhaching (DE)
(74) Vertreter: Siemens Patent Attorneys

(57) **Zusammenfassung**

Die Erfindung betrifft ein Verfahren zum Betreiben eines Netzwerks (10) mittels einer elektronischen Recheneinrichtung (12), mit den Schritten: Bereitstellen einer ersten deterministischen Kommunikationsverbindung (18) zwischen einer deterministischen Funktionseinheit (20) und einem Endgerät (14) der elektronischen Recheneinrichtung (12); Bereitstellen einer dritten Kommunikationsverbindung (22) zwischen einem Funkzugangsnetzwerk (16) der elektronischen Recheneinrichtung (12) und dem Endgerät (14) mittels der elektronischen Recheneinrichtung (12); Bereitstellen einer zweiten deterministischen Kommunikationsverbindung (24) zwischen dem Funkzugangsnetzwerk (16) und einem deterministischen Netzwerk (26) mittels der elektronischen Recheneinrichtung (12); und Übertragen eines Datenpakets von der deterministischen Funktionseinheit (20) zum deterministischen Netzwerk (26) oder umgekehrt mittels der elektronischen Recheneinrichtung (12).Ferner betrifft die Erfindung ein Computerprogrammprodukt, ein computerlesbares Speichermedium sowie eine elektronische Recheneinrichtung (12).

## Beschreibung

Die Erfindung betrifft ein Verfahren zum Betreiben eines deterministischen Netzwerks mittels einer elektronischen Recheneinrichtung gemäß dem geltenden Patentanspruch 1. Ferner betrifft die Erfindung ein Computerprogrammprodukt, ein computerlesbares Speichermedium sowie eine elektronische Recheneinrichtung.

Aus dem Stand der Technik ist bereits bekannt, dass deterministische Netzwerke, welche auch als DetNet bezeichnet werden, beispielsweise über 5G-Systeme betrieben werden können. Spezifischer, das 5G-System agiert wie ein DetNet Übertragungsknoten und übernimmt somit die Funktionalitäten einer DetNet Weiterleitungs-Subschicht.

Die Entwurfsstrategie von bestand 3GPP darin, für 5G-DetNet so viele 5G-TSN-Funktionen wie möglich wiederzuverwenden. Im im 5G-Netzwerk wurde keine neue Netzfunktion eingeführt. Wie 5G-TSN unterstützt auch 5G-DetNet nur eine zentralisierte Controller-Architektur.

Insbesondere werden folgende DetNet-Funktionalitäten nicht von 5G-DetNet bereitgestellt: Die Dienstteilschicht, welche insbesondere Paket-Replikations-, Eliminierungs- und Bestellfunktionen aufweist; ferner ist die Teilschichtweiterleitung nicht bekannt, worüber ein explizites Routing bereitgestellt ist; des Weiteren mangelt es der 5G-Variante an einem vollwertig verwalteten Router; ferner werden in der 5G-Variante nicht DetNet-Edgenodes und DetNet-Nodes hinter dem User Equipment (UE), welches auch als Endgerät bezeichnet wird, unterstützt.

Es ist somit wünschenswert, ein Verfahren bereitzustellen, bei welchem alle DetNet-Funktionen ohne wesentliche Verzögerungen, die durch die aktuelle 3GPP-Strategie der Emulation von DetNet-Funktionen im 5G-System verursacht werden, bereitgestellt werden. Ferner soll eine alternative Grundlage für 5G-DetNet geschaffen werden. Dadurch kann das Problem des Zweitanbieters entschärft werden und 5G-Systeme werden insbesondere günstiger.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen verbessert ein deterministisches Netzwerk betrieben werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines deterministischen Netzwerks mittels einer elektronischen Recheneinrichtung. Es wird eine erste deterministische Kommunikationsverbindung zwischen einer deterministischen Funktionseinheit und einem Endgerät der elektronischen Recheneinrichtung bereitgestellt. Es wird eine dritte deterministische Kommunikationsverbindung zwischen einem Funkzugangsnetzwerk der elektronischen Recheneinrichtung und dem Endgerät mittels der elektronischen Recheneinrichtung bereitgestellt. Es wird eine zweite deterministische Kommunikationsverbindung zwischen dem Funkzugangsnetzwerk und einem deterministischen Netzwerk mittels der elektronischen Recheneinrichtung bereitgestellt und es erfolgt ein Übertragen eines Datenpakets von der deterministischen Funktionseinheit zum deterministischen Netzwerk oder umgekehrt mittels der elektronischen Recheneinrichtung.

Insbesondere kann somit vereinfacht ein deterministisches Netzwerk betrieben werden.

Insbesondere besteht somit der Grundgedanke der Erfindung darin, dass so viele Funktionen wie möglich in der 5G-Datenebene und -Steuerungsebene durch eine DetNet-Funktionalität ersetzt werden.

Dabei ist insbesondere vorgesehen, dass das 5G-Netzwerk, welches insbesondere durch die elektronische Recheneinrichtung bereitgestellt wird, als logischer DetNet-Knoten fungiert. Dabei erhält das 5G-System keine Datenebene-Funktion (User Plane Function, UPF). Insbesondere wird somit über die Endgerät-Funkzugangsnetzwerk-Kombination eine DetNet-Weiterleitungsunterschicht implementiert.

Die deterministische Funktionseinheit kann dabei als deterministisches Netzwerk oder auch als ein deterministisches Endgerät oder dergleichen ausgebildet sein.

Insbesondere wird somit vorgeschlagen, 5G-Funktionen durch DetNet-Dienste zu ersetzen. Auf diese Weise werden die Probleme, welche eingehend beschrieben worden sind, gelöst.

Insbesondere wird das Endgerät auch als User Equipment (UE) bezeichnet. Das Funkzugangsnetzwerk kann insbesondere auch als RAN (Radio Access Network) bezeichnet werden.

Bei den deterministischen Kommunikationsverbindungen handelt es sich insbesondere um Kommunikationsverbindungen zur Datenübertragung auf der Datenebene. Im Nachfolgenden werden noch Verbindungen genannt, bei welchen sich insbesondere um Steuerungsverbindungen zum Steuern von Funktionen handelt, welche insbesondere nicht auf der Datenebene zu finden sind.

Gemäß einer vorteilhaften Ausgestaltungsform ist eine erste Verbindung zwischen dem Endgerät und einer Mobilitäts-Managementfunktion der elektronischen Recheneinrichtung bereitgestellt. Bei der Mobilitäts-Managementfunktion handelt es sich insbesondere um die sogenannte AMF (Access and Mobility Management Function). Zu den Hauptaufgaben gehören hierbei das Registrierungsmanagement, Verbindungsmanagement, Erreichbarkeitsmanagement, Mobilitätsmanagement und verschiedene Funktionen in Bezug auf Sicherheit, Zugangsmanagement und Autorisierung. Insbesondere autorisiert diese den Netzzugang und bildet das Verbindungsglied zwischen dem sogenannten Kernnetz und dem Funkzugangsnetz.

Eine weitere vorteilhafte Ausgestaltungsform sieht vor, dass eine zweite Verbindung zwischen dem Funkzugangsnetzwerk und einer Mobilitäts-Managementfunktion der elektronischen Recheneinrichtung bereitgestellt wird. Bei der Mobilitäts-Managementfunktion handelt es sich ebenfalls insbesondere um die sogenannte AMF (Access and Mobility Management Function) der elektronischen Recheneinrichtung.

Weiterhin vorteilhaft ist, wenn zwischen der Mobilitäts-Managementfunktion und einer Sitzungs-Verwaltungsfunktion der elektronischen Recheneinrichtung eine dritte Verbindung bereitgestellt wird. Insbesondere wird die Sitzungs-Managementfunktion auch als SMF (Session Management Funktion) bezeichnet. Hierbei handelt es sich insbesondere um eine Komponente, die eine grundlegende Rolle in der 5G-dienstorientierten-Architektur einnimmt. Die SMF ist in erster Linie für die Steuerung der Datenebene wie beispielsweise dem Erstellen, Aktualisieren und Entfernen von Protokoll-Data-Unit-Sitzungen und beispielsweise auch die Verwaltung des Sitzungskontexts verantwortlich.

Es hat sich weiterhin als vorteilhaft erwiesen, wenn zwischen der Sitzungs-Verwaltungsfunktion und einer Richtlinien-Kontrollfunktion der elektronischen Recheneinrichtung eine vierte Verbindung bereitgestellt wird. Bei der Richtlinien-Kontrollfunktion handelt es sich insbesondere um die sogenannte PCF (Policy Control Function), mit welcher Richtlinien innerhalb eines 5G-Netzwerks einfach erstellt und bereitgestellt werden können.

Dabei hat es sich ferner als vorteilhaft erwiesen, wenn zwischen der Richtlinien-Kontrollfunktion und einer zur elektronischen Recheneinrichtung extern bereitgestellten Kontrolleinrichtung für das deterministische Netzwerk eine fünfte Verbindung bereitgestellt wird. Insbesondere beinhaltet somit die PCF die Funktionalität der DetNet-Controller-Plane und interagiert mit dem DetNet-Controller, welcher außerhalb der elektronischen Recheneinrichtung bereitgestellt wird. Der DetNet-Controller ist wiederum insbesondere mit dem deterministischen Netzwerk verbunden. Zwischen der Richtlinien-Kontrollfunktion und der Kontrolleinrichtung, insbesondere dem DetNet-Controller, kann noch eine Network-Exposure-Function (NEF) ausgebildet sein. Insbesondere kommuniziert dann die PCF über die fünfte Verbindung mit der NEF und eine sechste Verbindung ist bereitgestellt zwischen der NEF und der Kontrolleinrichtung.

Weiterhin vorteilhaft ist, wenn zwischen dem Funkzugangsnetzwerk und dem deterministischen Netzwerk eine deterministische Datenebene bereitgestellt wird. Insbesondere wird somit die UPF gemäß dem Stand der Technik durch einen Router ersetzt, der die Funktionalität der Datenebene, mit anderen Worten der Dataplane-Funktionalität, implementiert. Die Kombination aus dem Endgerät und dem Funkzugangsnetzwerk funktioniert als DetNet-Knoten. Die PCF beinhaltet die Funktionalität der DetNet-Reglerebene (DetNet Controller Plane), und interagiert mit dem DetNet-Regler für die Konfiguration und Steuerung des DetNet-Flusses. Der UPF-Ersatz und die Endgerät-Funkzugangsnetzwerk-Kombination implementiert mindestens die DetNet-Weiterleitungs-Teilschicht.

Dabei kann weiterhin vorgesehen sein, dass zwischen der deterministischen Datenebene und der Sitzungs-Verwaltungsfunktion eine siebte Verbindung bereitgestellt wird. Mit anderen Worten kann die Sitzungs-Verwaltungsfunktion den UPF-Ersatz, insbesondere die deterministische Datenebenen-Funktion, steuern beziehungswese regeln.

In einer weiteren vorteilhaften Ausgestaltungsform ist es vorgesehen, dass die erste Kommunikationsverbindung mit einer als kapillares Netzwerk ausgebildeten nichtdeterministischen Funktionseinheit bereitgestellt wird. Das Endgerät dient somit als DetNet-Edge-Node zwischen dem deterministischen Netzwerk und einem kapillaren Netzwerk. Insbesondere kann mit weiteren Endgeräten, welche beispielsweise keine DetNet-Kompatibilität aufweisen, gekoppelt sein.

Es hat sich weiterhin als vorteilhaft erwiesen, wenn die deterministische Kommunikation zwischen der deterministischen Funktionseinheit und dem deterministischen Netzwerk mittels einer Multi-Protokoll-Label-Switching-Kommunikation oder einer Time-Sensitive-Networking-Kommunikation oder eine Internet-Protokoll-Kommunikation realisiert wird. Somit kann auf unterschiedlichen Protokollarten eine Kommunikation über die elektronische Recheneinrichtung bereitgestellt werden.

Es hat sich weiter als vorteilhaft erwiesen, wenn mittels einer Primäruhr des Netzwerks ein für eine Synchronisation innerhalb der Kommunikation bereitgestellt wird. Somit kann über die Kontrolleinrichtung ein Zeit-sensitives-Netzwerk konfiguriert werden.

Ebenfalls vorteilhaft ist, wenn mittels der elektronischen Recheneinrichtung eine deterministische Subschicht für die deterministische Kommunikation konfiguriert wird. Insbesondere kann somit die elektronische Recheneinrichtung als DetNet-Knoten fungieren. Insbesondere können somit 5G-Funktionalitäten im deterministischen Netzwerk bereitgestellt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft auch ein computerlesbares Speichermedium mit zumindest einem Computerprogrammprodukt nach dem vorhergehenden Aspekt.

Ferner betrifft die Erfindung auch eine elektronische Recheneinrichtung für ein deterministisches Netzwerk, mit zumindest einem Endgerät und einem Funkzugangsnetzwerk, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Ferner betrifft die Erfindung auch ein deterministisches Netzwerk mit zumindest einer elektronischen Recheneinrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie des deterministischen Netzwerks anzusehen. Die elektronische Recheneinrichtung sowie das deterministische Netzwerk weisen hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:
- FIG 1: ein schematisches Blockschaltbild gemäß einer ersten Ausführungsform eines deterministischen 5G-Netzwerks mit einer ersten Ausführungsform einer elektronischen Recheneinrichtung;
- FIG 2: ein zweites schematisches Blockschaltbild gemäß einer weiteren Ausführungsform eines deterministischen 5G-Netzwerks mit einer weiteren Ausführungsform einer elektronischen Recheneinrichtung;
- FIG 3: eine gNB-Architektur für ein deterministisches Netzwerk;
- FIG 4: eine Schnittstellen-Protokoll-Struktur gemäß der Ausführungsform aus FIG 3;
- FIG 5: eine weitere Schnittstellen-Protokoll-Struktur für die Ausführungsform aus FIG 3; und
- FIG 6: eine weitere Schnittstellen-Protokoll-Struktur für eine Ausführungsform gemäß FIG 3.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

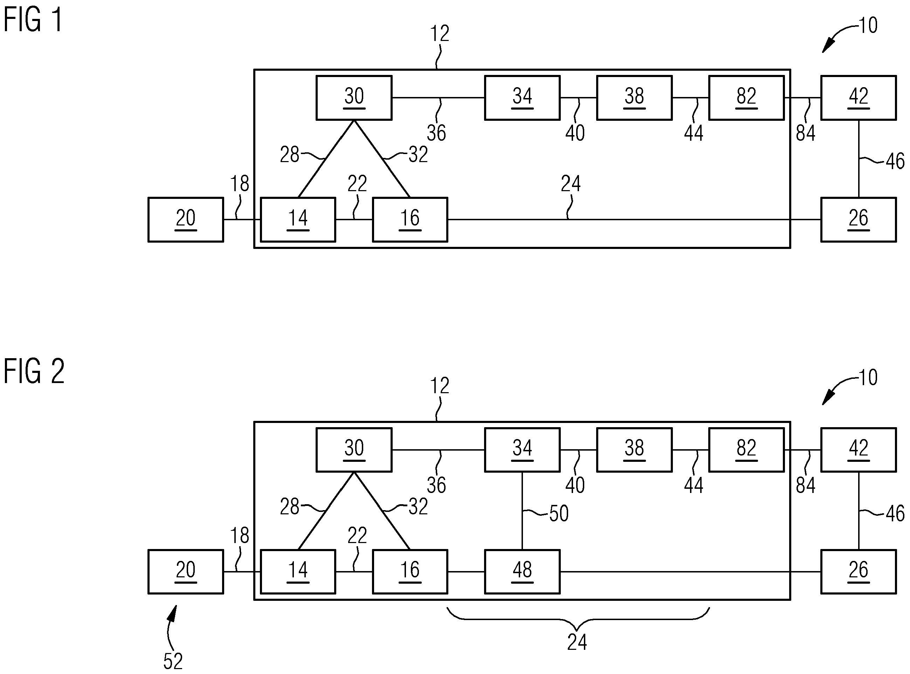

FIG 1 zeigt ein schematisches Blockschaltbild gemäß einer Ausführungsform eines Netzwerks 10 mit einer elektronischen Recheneinrichtung 12. Die elektronische Recheneinrichtung 12 weist zumindest ein Endgerät 14 sowie ein Funkzugangsnetzwerk 16 auf. Das Endgerät 14 kann auch als User Equipment (UE) bezeichnet werden und das Funkzugangsnetzwerk 16 kann auch als Radio Access Network (RAN) bezeichnet werden.

Insbesondere ist in der FIG 1 ein Ausführungsbeispiel zum Verfahren zum Betreiben des Netzwerks 10 gezeigt. Es erfolgt das Bereitstellen einer ersten deterministischen Kommunikationsverbindung 18 zwischen einer deterministischen Funktionseinheit 20 und dem Endgerät 14 mittels der elektronischen Recheneinrichtung 12. Es wird eine dritte deterministische Kommunikationsverbindung 22 zwischen dem Endgerät 14 und dem Funkzugangsnetzwerk 16 bereitgestellt. Es wird eine zweite deterministische Kommunikationsverbindung 24 zwischen dem Funkzugangsnetzwerk 16 und einem deterministischen Netzwerk 26 bereitgestellt. Es erfolgt dann das Übertragen des Datenpakets von der deterministischen Funktionseinheit 20 zum deterministischen Netzwerk 26 oder umgekehrt mittels der elektronischen Recheneinrichtung 12.

Die deterministischen Kommunikationsverbindungen 18, 22, 24 befinden sich dabei insbesondere in der sogenannten User-Plane. Die weiter aufgezählten Verbindungen befinden sich hingegen in der sogenannten Control-Plane.

Gemäß dem in FIG 1 gezeigten Ausführungsbeispiel wird insbesondere eine erste Verbindung 28 zwischen dem Endgerät 14 und einer Mobilitäts-Managementfunktion 30, welche auch als Access Mobility Management Function (AMF) bezeichnet wird, bereitgestellt. Ferner wird eine zweite Verbindung 32 zwischen dem Funkzugangsnetzwerk 16 und der Mobilitäts-Managementfunktion 30 der elektronischen Recheneinrichtung 12 bereitgestellt. Des Weiteren wird zwischen der Mobilitäts-Managementfunktion 30 und einer Sitzungs-Verwaltungsfunktion 34, welche auch als Session Management Function (SMF) bezeichnet wird, der elektronischen Recheneinrichtung 12 eine dritte Verbindung 36 bereitgestellt. Ferner ist es beispielsweise vorgesehen, dass zwischen der Sitzungs-Verwaltungsfunktion 34 und einer Richtlinien-Kontrollfunktion 38, welche auch als Policy Control Function (PCF) bezeichnet werden kann, eine vierte Verbindung 40 bereitgestellt wird. Ferner ist gezeigt, dass zwischen der Richtlinien-Kontrollfunktion 38 und einer zur elektronischen Recheneinrichtung 12 extern bereitgestellten Kontrolleinrichtung 42 eine fünfte Verbindung 44, beispielsweise in Form einer vierten Kommunikationsverbindung, bereitgestellt wird. Insbesondere ist zwischen der Richtlinien-Kontrollfunktion 38 und der Kontrolleinrichtung 42 noch eine NEF (Network-Exposure-Function) 82 gezeigt, welche über die fünfte Verbindung 44 mit der Richtlinien-Kontrollfunktion 38 verbunden ist und über eine sechste Verbindung 84 mit der Kontrolleinrichtung 42 verbunden ist. Die Kontrolleinrichtung 42 ist wiederum über eine fünfte Kommunikationsverbindung 46 mit dem deterministischen Netzwerk 26 gekoppelt.

FIG 2 zeigt wiederum eine weitere Ausführungsform gemäß der elektronischen Recheneinrichtung 12. Im Unterschied zur FIG 1 ist vorliegend gezeigt, dass zwischen dem Funkzugangsnetzwerk 16 und dem deterministischen Netzwerk 26 eine deterministische Datenebenen-Funktion 48 bereitgestellt wird. Die deterministische Datenebene 48 kann auch als Dataplane bezeichnet werden. Dabei kann insbesondere vorgesehen sein, dass zwischen der deterministischen Datenebenen-Funktion 48 und der Sitzungsverwaltungsfunktion 34 eine siebte Verbindung 50 bereitgestellt wird.

Ferner kann insbesondere vorgesehen sein, dass die erste deterministische Kommunikationsverbindung 18 mit der als kapillares Netzwerk 52 ausgebildeten Funktionseinheit 20 bereitgestellt wird. Mit anderen Worten kann das Endgeräte 14 als DetNet-Edge-Node für das kapillare Netzwerk 52 fungieren.

Ferner kann vorgesehen sein, dass als Kommunikation zwischen der deterministischen Funktionseinheit 20 und dem deterministischen Netzwerk 26 eine Multi-Protokoll-Label-Switching-Kommunikation oder eine Time-Sensitive-Networking-Kommunikation oder eine Internet-Protokoll-Kommunikation durchgeführt wird. Ferner kann vorgesehen sein, dass mittels der im deterministischen Netzwerk 26, der elektronischen Recheneinrichtung 12 oder der deterministischen Funktionseinheit 20 ein Zeitsignal für eine Synchronisation innerhalb der Kommunikation bereitgestellt wird. Des Weiteren ist insbesondere gezeigt, dass mittels der elektronischen Recheneinrichtung 12 eine deterministische Subschicht für die DetNet-Kommunikation bereitgestellt wird.

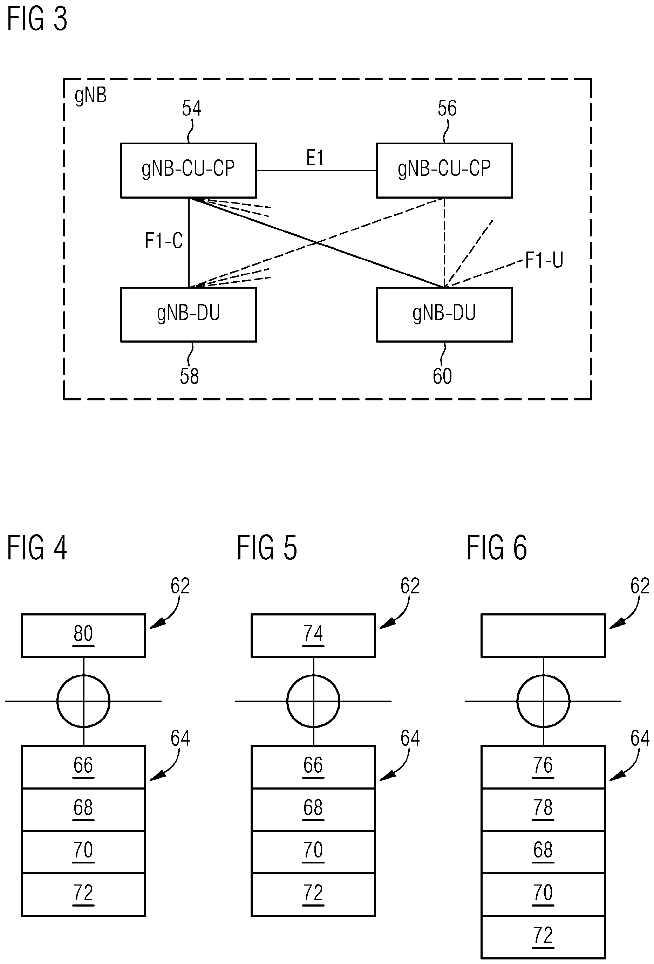

FIG 3 zeigt wiederum ein schematisches Blockschaltbild für eine Ausführungsform, wobei die Kommunikation zwischen gNB Zentraleinheiten 54, 56 und gNB (Basisstation der fünften Generation) verteilten Einheiten 58, 60 eine Kommunikation auf Basis von DetNet durchgeführt werden kann.

Insbesondere im Falle von F1-C und E1 erfordert dies einen Ersatz der IP-Schicht und wahlweise auch von STCP mit DetNet.

FIG 4 zeigt hierzu die Kontrollschichten für F1-C. Dabei sind insbesondere die Anwendungsschicht 62 und eine Transportnetzwerkschicht 64 gezeigt. Die Anwendungsschicht 62 ist wiederum als F1-AP Schicht 80 ausgebildet, während die Transportnetzwerkschicht 64 eine SCTP-Schicht 66, eine IP-Schicht 68, eine Datalink-Layer-Schicht 70 sowie eine physische Schicht 72 aufweist.

FIG 5 zeigt wiederum die Kontrollschichten für die E1-Kommunikation. Dabei ist die Anwendungsschicht 62 als E1-AP-Schicht 74 ausgebildet, und die Transportnetzwerkschicht 64 weist die SCTP-Schicht 66, die IP-Schicht 68, die Datalink-Layer-Schicht 70, sowie die physische Schicht 72 auf.

FIG 6 zeigt wiederum, ein Protokoll gemäß dem Stand der Technik, wobei die GTP-U und der UTP Schicht durch DetNet ersetzt werden kann. Hierbei weist wiederum die Transportnetzwerkschicht 64 eine GTP-U-Schicht 76, eine UDP-Schicht 78 die IP-Schicht 68 die Datenlink-Layer-Schicht 70 und die physische Schicht 72 auf.

## Patentansprüche

1. Verfahren zum Betreiben eines Netzwerks (10) mittels einer elektronischen Recheneinrichtung (12), mit den Schritten:
- Bereitstellen einer ersten deterministischen Kommunikationsverbindung (18) zwischen einer Funktionseinheit (20) und einem Endgerät (14) der elektronischen Recheneinrichtung (12);
- Bereitstellen einer dritten Kommunikationsverbindung (22) zwischen einem Funkzugangsnetzwerk (16) der elektronischen Recheneinrichtung (12) und dem Endgerät (14) mittels der elektronischen Recheneinrichtung (12);
- Bereitstellen einer zweiten deterministischen Kommunikationsverbindung (24) zwischen dem Funkzugangsnetzwerk (16) und einem deterministischen Netzwerk (26) mittels der elektronischen Recheneinrichtung (12); und
- Übertragen eines Datenpakets von der deterministischen Funktionseinheit (20) zum deterministischen Netzwerk (26) oder umgekehrt mittels der elektronischen Recheneinrichtung (12).

2. Verfahren nach Anspruch 1, **dadurch gekennzeichnet, dass**
eine erste Verbindung (28) zwischen dem Endgerät (14) und einer Mobilitätsmanagementfunktion (30) der elektronischen Recheneinrichtung (12) bereitgestellt wird.

3. Verfahren nach Anspruch 1 oder 2, **dadurch gekennzeichnet, dass**
eine zweite Verbindung (32) zwischen dem Funkzugangsnetzwerk (16) und einer Mobilitätsmanagementfunktion (30) der elektronischen Recheneinrichtung (12) bereitgestellt wird.

4. Verfahren nach einem der Ansprüche 2 oder 3, **dadurch gekennzeichnet, dass**
zwischen der Mobilitätsmanagementfunktion (30) und einer Sitzungsverwaltungsfunktion (34) der elektronischen Recheneinrichtung (12) eine dritte Verbindung (36) bereitgestellt wird.

5. Verfahren nach Anspruch 4, **dadurch gekennzeichnet, dass**
zwischen der Sitzungsverwaltungsfunktion (34) und einer Richtlinienkontrollfunktion (38) der elektronischen Recheneinrichtung (12) eine vierte Verbindung (40) bereitgestellt wird.

6. Verfahren nach Anspruch 5, **dadurch gekennzeichnet, dass**
zwischen der Richtlinienkontrollfunktion (38) und einer zur elektronischen Recheneinrichtung (12) extern bereitgestellten Kontrolleinrichtung (42) für das zweite deterministische Netzwerk (26) eine fünfte Verbindung (44) bereitgestellt wird.

7. Verfahren nach einem der vorhergehenden Ansprüche, **dadurch gekennzeichnet, dass** zwischen dem Funkzugangsnetzwerk (16) und dem zweiten deterministischen Netzwerk (26) eine deterministische Datenebene (48) bereitgestellt wird.

8. Verfahren nach Anspruch 4 und 7, **dadurch gekennzeichnet, dass**,
zwischen einer deterministischen Datenebenen-Funktion (48) und der Sitzungsverwaltungsfunktion (34) eine siebte Verbindung (50) bereitgestellt wird.

9. Verfahren nach einem der vorhergehenden Ansprüche, **dadurch gekennzeichnet, dass**
die erste Kommunikationsverbindung (18) mit der als kapillares Netzwerk (52) ausgebildeten deterministischen Funktionseinheit (20) bereitgestellt wird.

10. Verfahren nach einem der vorhergehenden Ansprüche, **dadurch gekennzeichnet, dass**
als Kommunikation zwischen der deterministischen Funktionseinheit (20) und dem deterministischen Netzwerk (26) eine Multi-Protocol-Label-Switching-Kommunikation oder eine Time-Sensitive-Networking-Kommunikation oder eine Internet-Protocol-Kommunikation durchgeführt wird.

11. Verfahren nach einem der vorhergehenden Ansprüche, **dadurch gekennzeichnet, dass** mittels einer Primäruhr des Netzwerks (10) ein Zeitsignal für eine Synchronisation innerhalb der Kommunikation bereitgestellt wird.

12. Verfahren nach einem der vorhergehenden Ansprüche, **dadurch gekennzeichnet, dass** mittels der elektronischen Recheneinrichtung (12) eine deterministische Subschicht für die Kommunikation konfiguriert wird.

13. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (12) für ein deterministisches Netzwerk (10), mit zumindest einem Endgerät (14) und einem Funkzugangsnetzwerk (16), wobei die elektronische Recheneinrichtung (12) zum Durchführen eines Verfahrens nach einem der Ansprüche 1 bis 12 ausgebildet ist.
